# EUROPÄISCHE PATENTANMELDUNG

(11) **EP 4 376 451 A1**
(43) Veröffentlichungstag der Anmeldung: **29.05.2024**
(21) Anmeldenummer: 22209813.9
(22) Anmeldetag: 28.11.2022
(51) Int. Cl.: H04W 4/70, H04L 67/10, H04L 67/12, H04L 67/55, H04L 67/562

(54) **VERFAHREN ZUM BEREITSTELLEN EINER KOMMUNIKATIONSVERBINDUNG IN EINEM BROKERLOSEN PUBLISH-SUBSCRIBE-NETZWERK AN EINE ANWENDUNG, VERFAHREN ZUR KOMMUNIKATION IN EINEM BROKERLOSEN PUBLISH-SUBSCRIBE-NETZWERK UND BROKERLOSES PUBLISH-SUBSCRIBE-NETZWERK**

(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Bei dem Verfahren zum Bereitstellen einer Kommunikationsverbindung in einem brokerlosen Publish-Subscribe-Netzwerk an eine Anwendung (APPC1) wird eine Anforderung (1) der Anwendung (APPC1) an die Datenfluss-Qualität entgegengenommen und eine Netzwerkkonfiguration für die Kommunikationsverbindung abhängig von der Datenfluss-Qualität gewählt und ein, bevorzugt virtuelles, Netzwerk (NW) mit dieser Netzwerkkonfiguration herangezogen und die Kommunikationsverbindung mit diesem Netzwerk realisiert.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zum Bereitstellen einer Kommunikationsverbindung in einem brokerlosen Publish-Subscribe-Netzwerk an eine Anwendung sowie ein Verfahren zur Kommunikation in einem brokerlosen Publish-Subscribe-Netzwerk und ein brokerloses Publish-Subscribe-Netzwerk

In Industrieanwendungen werden zunehmend softwareimplementierte Anwendungen eingesetzt, welche in datenzentrierter Form realisiert sind. Die software-basierten Anwendungen nutzen regelmäßig brokerlose Publish-Subscribe-Kommunikation. Bekannte brokerlose Implementierungen für Publish-Subscribe-Kommunikation nutzen insbesondere den data distribution service (DDS) (siehe: https://www.dds-foundation.org/) für software-basierte Anwendungen.

In brokerlosen Publish-Subscribe-Netzwerken verbinden sich Knoten ohne eine zentrale Vermittlungskomponente (z.B. einen Broker) in einem Netzwerk miteinander, wobei das Netzwerk Veröffentlichungen und Abonnements zwischen diesen Knoten erlaubt. Die Funktion der Vermittlungskomponente wird im brokerlosen Fall dezentral in den Knoten selbst realisiert.

Die Veröffentlichungen werden zu einem spezifischen Identifier, einem sogenannten Thema in DDS, zu allen Knoten, die zu diesem Thema Veröffentlichungen abonniert haben, übermittelt.

Eine Publish-Subscribe-Kommunikation beruht oft auf unterliegenden Netzwerken, die nicht immer die von der jeweiligen Anwendung angestrebten Datenfluss-Qualitäten erfüllen.

Bestimmte Datenfluss-Qualitäten sind jedoch häufig erforderlich.

Es ist vor diesem Hintergrund des Standes der Technik Aufgabe der Erfindung, ein verbessertes Verfahren zum Bereitstellen einer Kommunikationsverbindung in einem brokerlosen Publish-Subscribe-Netzwerk an eine Anwendung sowie ein verbessertes Verfahren zur Kommunikation in einem brokerlosen Publish-Subscribe-Netzwerk anzugeben. Zudem ist es Aufgabe der Erfindung, ein verbessertes brokerloses Publish-Subscribe-Netzwerk zu schaffen.

Diese Aufgabe der Erfindung wird mit einem Verfahren zum Bereitstellen einer Kommunikationsverbindung in einem brokerlosen Publish-Subscribe-Netzwerk an eine Anwendung mit den in Anspruch 1 angegebenen Merkmalen sowie mit einem Verfahren zur Kommunikation in einem brokerlosen Publish-Subscribe-Netzwerk und brokerloses Publish-Subscribe-Netzwerk mit den in Anspruch 8 angegebenen Merkmalen und mit einem Publish-Subscribe-Netzwerk mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Bereitstellen einer Kommunikationsverbindung in einem brokerlosen Publish-Subscribe-Netzwerk an eine Anwendung wird eine Anforderung der Anwendung an die Datenfluss-Qualität entgegengenommen und es wird eine Netzwerkkonfiguration für die Kommunikationsverbindung abhängig von der Datenfluss-Qualität gewählt und es wird ein bevorzugterweise virtuelles Netzwerk mit dieser Netzwerkkonfiguration herangezogen und die Kommunikationsverbindung mit diesem Netzwerk realisiert.

Mittels des erfindungsgemäßen Verfahrens hängt die erzielte Datenfluss-Qualität bei einer Publish-Subscribe-Kommunikation in einem Publish-Subscribe-Netzwerk nicht zufällig von der Datenfluss-Qualität des herangezogenen, bevorzugt virtuellen, Netzwerks ab, sondern das, bevorzugt virtuelle, Netzwerk wird gezielt abhängig von einer angestrebten Datenfluss-Qualität bei der Publish-Subscribe-Kommunikation herangezogen. Auf diese Weise muss sich nicht auf anhand sonstiger Kriterien ausgewählte oder aufgesetzte, bevorzugt virtuelle, Netzwerke verlassen werden. Eine Publish-Subscribe-Kommunikation, die insbesondere im industriellen Umfeld eine bestimmte Datenfluss-Qualität voraussetzt, kann mittels des erfindungsgemäßen Verfahrens einfach und planbar umgesetzt werden. Die Anforderung der Datenfluss-Qualität kann insbesondere mittels einer Anwendungsschnittstelle, vorzugsweise in der Art einer API (API = (engl.) "application programming interface"), realisiert werden, welche für eine Initiierung einer Publish-Subscribe-Kommunikation ohnehin regelmäßig genutzt wird. Besonders bevorzugt wird eine solche Anwendungsschnittstelle für die Anforderung der Datenfluss-Qualität erweitert, sodass die Anwendungsschnittstelle für die Anforderung der Datenfluss-Qualität und zugleich für die Initiierung der Publish-Subscribe-Kommunikation im Übrigen genutzt, d. h. herangezogen, wird.

Bei dem erfindungsgemäßen Verfahren ist in einer vorteilhaften Weiterbildung die Kommunikationsverbindung eine Publish-Verbindung der Anwendung. Im industriellen Umfeld können somit Publish-Verbindungen mit vorab festgelegter Datenfluss-Qualität realisiert werden.

In einer zur vorhergehenden Weiterbildung alternativen oder zusätzlichen Weiterbildung der Erfindung ist die Kommunikationsverbindung eine Subscribe-Verbindung der Anwendung. Im industriellen Umfeld können in dieser Weiterbildung der Erfindung Subscribe-Verbindungen mit vorab festgelegter Datenfluss-Qualität realisiert werden.

Bei dem erfindungsgemäßen Verfahren wird vorteilhaft ein Netzwerk-Manager herangezogen oder instanziiert, welcher abhängig von der mindestens einen Anforderung an die Datenfluss-Qualität eine Netzwerkkonfiguration ermittelt.

Geeigneterweise wird bei dem erfindungsgemäßen Verfahren die Netzwerkkonfiguration abhängig von der Datenfluss-Qualität ausgewählt oder gebildet. Insbesondere kann ein, bevorzugt virtuelles, Netzwerk derart aufgesetzt oder ausgewählt werden, dass es die mittels der Anforderung angeforderte Datenfluss-Qualität gewährleistet. Ebenso kann der Netzwerkmanager abhängig von der mittels der Anforderung geforderten Datenfluss-Qualität gewählt oder aufgesetzt oder instanziiert werden.

Bevorzugt wird bei dem erfindungsgemäßen Verfahren das Netzwerk abhängig von der Datenfluss-Qualität ausgewählt. In dieser Weiterbildung der Erfindung kann vorteilhaft ein bereits eingerichtetes Netzwerk, welches die Anforderung an die Datenfluss-Qualität erfüllt, herangezogen werden. D. h., das Netzwerk muss nicht eigens eingerichtet werden, sondern das bereits eingerichtete Netzwerk wird ohne das Erfordernis zusätzlichen Aufwandes genutzt.

Bei dem Verfahren wird in einer vorteilhaften Weiterbildung der Erfindung das Netzwerk abhängig von der Datenfluss-Qualität mit der Netzwerkkonfiguration konfiguriert.

Vorteilhaft ist bei dem erfindungsgemäßen Verfahren das Netzwerk mit einem 5G-Netzerk oder mit einem 6G-Netzwerk realisiert. Insbesondere 5G- und/oder 6G-Netzwerke finden im industriellen Umfeld Verbreitung und erlauben den Aufbau von Publish-Subscribe-Netzwerken.

Bei dem erfindungsgemäßen Verfahren zur Kommunikation in einem brokerlosen Publish-Subscribe-Netzwerk wird mit einem erfindungsgemäßen Verfahren zum Bereitstellen einer Kommunikationsverbindung in einem brokerlosen Publish-Subscribe-Netzwerk wie vorhergehend beschrieben eine Kommunikationsverbindung bereitgestellt und die Kommunikationsverbindung zur Kommunikation herangezogen. Mit anderen Worten wird die Kommunikationsverbindung nicht allein bereitgestellt, sondern auch an die Publish-Subscribe-Kommunikation angepasst.

Zweckmäßig wird bei dem erfindungsgemäßen Verfahren die Kommunikationsverbindung für einen Fertigungsprozess und/oder einen Wartungsprozess und/oder einen Logistikprozess und/oder für einen Robotikprozess und/oder ein Robotiksystem herangezogen. Gerade im industriellen Umfeld wie insbesondere bei Fertigungsprozessen und/oder Wartungsprozessen und/oder Logistikprozessen und/oder Robotikprozessen und/oder in Robotiksystemen ist die Gewährleistung einer bestimmten Datenfluss-Qualität besonders vorteilhaft.

Das erfindungsgemäße brokerlose Publish-Subscribe-Netzwerk ist insbesondere zur Ausführung eines erfindungsgemäßen Verfahrens wie vorhergehend erläutert ausgebildet und weist eine Datenfluss-Komponente auf, die eine Anforderung für eine Datenfluss-Qualität einer Kommunikationsverbindung in diesem Publish-Subscribe-Netzwerk entgegennimmt und welche ausgebildet ist, ein Konfigurieren eines, bevorzugt virtuellen, Netzwerks abhängig von der Datenfluss-Qualität zu initiieren. Insbesondere wird ein Netzwerk abhängig von der Datenfluss-Qualität aufgesetzt und konfiguriert oder entsprechend der mittels der Anforderung angeforderten Datenfluss-Qualität ausgewählt. Zweckmäßig ist die Kommunikationsverbindung eine Kommunikationsverbindung einer Publish-Subscribe-Kommunikation, insbesondere eine Publish-Kommunikation und/oder eine Subscribe-Kommunikation.

Das erfindungsgemäße brokerlose Publish-Subscribe-Netzwerk weist bevorzugt eine Netzwerk-Komponente auf, welche ausgebildet ist, abhängig von der Datenfluss-Qualität und initiiert durch die Datenflusskomponente eine Netzwerkkonfiguration für das, bevorzugt virtuelle, Netzwerk zu ermitteln. Zweckmäßig hängt die Netzwerkkonfiguration von der Datenfluss-Qualität ab und dient dazu, das, bevorzugt virtuelle, Netzwerk zur Erzielung dieser Datenfluss-Qualität zu konfigurieren. Alternativ und ebenfalls vorteilhaft ermittelt die Netzwerk-Komponente dasjenige Netzwerk, welches eine solche Netzwerkkonfiguration aufweist, welche diese Datenfluss-Qualität garantiert. Mit anderen Worten, die Netzwerk-Komponente wählt das Netzwerk und/oder die entsprechenden Netzwerkprofile mit der entsprechenden Netzwerkkonfiguration aus, anstatt eine Netzwerkkonfiguration für das, bevorzugt virtuelle, Netzwerk zu ermitteln.

Das erfindungsgemäße brokerlose Publish-Subscribe-Netzwerk weist eine Netzwerksteuerungs-Komponente auf, welche ausgebildet ist, abhängig von der Datenfluss-Qualität das, bevorzugt virtuelle, Netzwerk zu konfigurieren.

Nachfolgend wird die Erfindung anhand in der Zeichnung dargestellter Ausführungsbeispiele näher erläutert. Es zeigen:
- Fig. 1: Ein Ausführungsbeispiel eines erfindungsgemäßen Verfahrens bei der Einrichtung eines Abonnements einer Veröffentlichung durch eine Anwendungskomponente mit anfänglichen Verfahrensschritten schematisch in einer diagrammatischen Darstellung,
- Fig. 2: weitere Verfahrensschritte des erfindungsgemäßen Verfahrens schematisch in einer diagrammatischen Darstellung,
- Fig. 3: weitere Verfahrensschritte des erfindungsgemäßen Verfahrens schematisch in einer diagrammatischen Darstellung,
- Fig. 4: weitere Verfahrensschritte des erfindungsgemäßen Verfahrens schematisch in einer diagrammatischen Darstellung, sowie
- Fig. 5: ein alternatives Ausführungsbeispiel des erfindungsgemäßen Verfahrens schematisch in einer diagrammatischen Darstellung.

Bei dem in den Figuren gezeigten Ausführungsbeispiel werden die herkömmlich für brokerlose Publish-Subscribe-Kommunikation eines Publish-Subscribe-Netzwerks verwendeten Anwendungsschnittstellen angepasst und erweitert. Unter Anwendungsschnittstellen werden im Rahmen der vorliegenden Erfindung sogenannte API (engl. = "application programming interface") verstanden, welche auch als Programmierschnittstellen bezeichnet werden. Die Anwendungsschnittstellen werden um zusätzliche Parameter ergänzt, welche die gewünschten Datenfluss-Qualitäten enthalten, die im Rahmen dieser Anmeldung auch als Quality-of-Service, kurz QoS, bezeichnet werden. Solche Datenfluss-Qualitäten werden von Anwendungskomponenten APPC1 je nach Zielsetzung der Publish-Subscribe-Kommunikation gefordert. Die gewünschten Datenfluss-Qualitäten werden von drei zusätzlich vorgesehenen Komponenten eines Publish-Subscribe-Netzwerks herangezogen. Diese zusätzlichen Komponenten umfassen einen QoS-Manager QOSM, einen Local-Network-Manager LNM und einen Network-Controller NWC.

Mittels des Local-Network-Managers LNM, des QoS-Managers QOSM und des Network-Controllers NWC wird für jeden ersten Aufruf der Anwendungsschnittstellen zur Einleitung eines Publikations- oder eines Abonnement-Vorgangs eine Netzwerkkonfiguration eines virtuellen Netzwerks NW, beispielsweise eines LAN-Netzwerks, welches etwa ein Campus-Netzwerk CNW bildet, aufgesetzt. Alternativ kann die Netzwerkkonfiguration ausgewählt werden, wenn diese Netzwerkkonfiguration zuvor bereits aufgesetzt worden ist. Die Netzwerkkonfiguration gewährleistet die Datenfluss-Qualitäten QoS wie sie in den Parametern der angepassten Anwendungsschnittstellen für die Publish-Subscribe-Kommunikation enthalten sind. Grundsätzlich kann in weiteren, nicht eigens dargestellten, Ausführungsbeispielen, welche im Übrigen dem dargestellten Ausführungsbeispiel entsprechen, ein physisches, also nicht-virtuelles, Netzwerk aufgesetzt und entsprechend mit einer passenden Netzwerkkonfiguration konfiguriert werden.

Die Publish-Subscribe-Kommunikation wird im vorliegenden Ausführungsbeispiel mittels eines unterliegenden 5G-Netzwerks realisiert. In weiteren, nicht eigens dargestellten Ausführungsbeispielen kann anstelle des 5G-Netzwerks ein 6G-Netzwerk oder ein kombiniertes 5G/6G-Netzwerk zum Einsatz kommen. Im gezeigten Ausführungsbeispiel ist das 5G-Netzwerk als Campus-Netzwerk CNW realisiert, welches ein Fertigungsnetzwerk für Fertigungskomponenten bildet und dazu auf einem Fertigungscampus realisiert ist.

Die Publish-Subscribe-Kommunikation wird brokerlos in dem Publish-Subscribe-Netzwerk eingerichtet:
In einem ersten Verfahrensteil wird das 5G-Netzwerk abhängig von den gewünschten Datenfluss-Qualitäten QoS eingerichtet.

In einem zweiten Verfahrensteil wird ein Datenfluss-Qualitäten-Abgleich durchgeführt, um die Kommunikationsteilnehmer der Publish-Subscribe-Kommunikation festzulegen. Dazu wird eine auf die angestrebten Datenfluss-Qualitäten QoS abgestimmte Netzwerkkonfiguration lokal auf einem Knoten des 5G-Netzwerks gespeichert, sodass die passende Netzwerkkonfiguration widerspruchsfrei ermittelt werden kann.

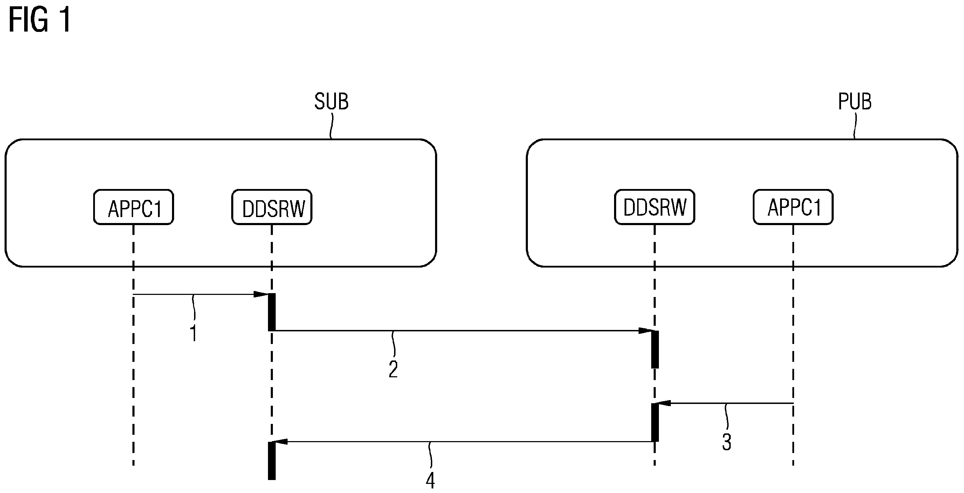

Der erste Verfahrensteil wird mit den in Fig. 1 dargestellten Verfahrensschritten realisiert.

Wie in Fig. 1 dargestellt wird als Abonnent auf der Abonnementseite SUB eine Anwendungskomponente APPC1 gestartet, welche zum Empfang eines Abonnements eine weitere Anwendungskomponente APPC1 im Campusnetzwerk CNW identifiziert, die auf der Publikationsseite PUB Publikationen für die Anwendungskomponente APPC1 auf Abonnementseite SUB bereitstellt.

Um die Anwendungskomponenten APPC1 auf der Abonnementseite SUB und auf der Publikationsseite PUB im Campus-Netzwerk CNW zu identifizieren, wird eine Endpunkt-Discovery mittels zweier DDS-Reader und -Writer DDSRW durchgeführt. Dazu übermittelt in einem Anfrageschritt 1 wie in Fig. 1 dargestellt die Anwendungskomponente APPC1 auf Abonnementseite SUB ihren Kommunikationswunsch zum Abschluss eines Abonnements dem DDS-Reader und -Writer DDSRW. Dieser teilt den Kommunikationswunsch weiteren DDS-Readern und -Writern DDSRW mit und übermittelt in einem Übermittlungsschritt 2 den Kommunikationswunsch an einen DDS-Reader und -Writer DDSRW auf Publikationsseite PUB, der infrage kommende Anwendungskomponenten APPC1 identifizieren kann. Umgekehrt übermittelt eine Anwendungskomponente APPC1 auf Publikationsseite PUB mittels einer Anfrage 3 einen Publikationswunsch an den publikationsseitigen DDS-Reader und -Writer DDSRW. Dieser macht den Publikationswunsch weiteren DDS-Readern und -Writern DDSRW auf Abonnementseite SUB mittels des Kommunikationsschritts 4 bekannt. Die DDW-Reader und -Writer speichern die entgegengenommenen Kommunikationswünsche und Publikationswünsche und teilen den Anwendungskomponenten APPC1 der Abonnementseite SUB jeweils den bestehenden Kommunikationswunsch der Anwendungskomponente APPC1 der Publikationsseite PUB mit und umgekehrt.

Die Kommunikationswünsche sowie die Publikationswünsche werden im gezeigten Ausführungsbeispiel mittels IP-Multicastings übertragen. Die DDS-Reader und -Writer DDSRW der Abonnementseite SUB und der Publikationsseite PUB übertragen periodisch Discovery-Nachrichten an eine zuvor festgelegte Multicast-Adresse. Diese Discovery-Nachrichten enthalten sämtliche Information, die von anderen Teilnehmern benötigt werden, um die Sender der jeweiligen Discovery-Nachricht eindeutig zu identifizieren. Wenn die DDS-Reader und -Writer DDSRW Discovery-Nachrichten weiterer Teilnehmer empfangen, so speichern sie diese in einer lokalen Datenbank.

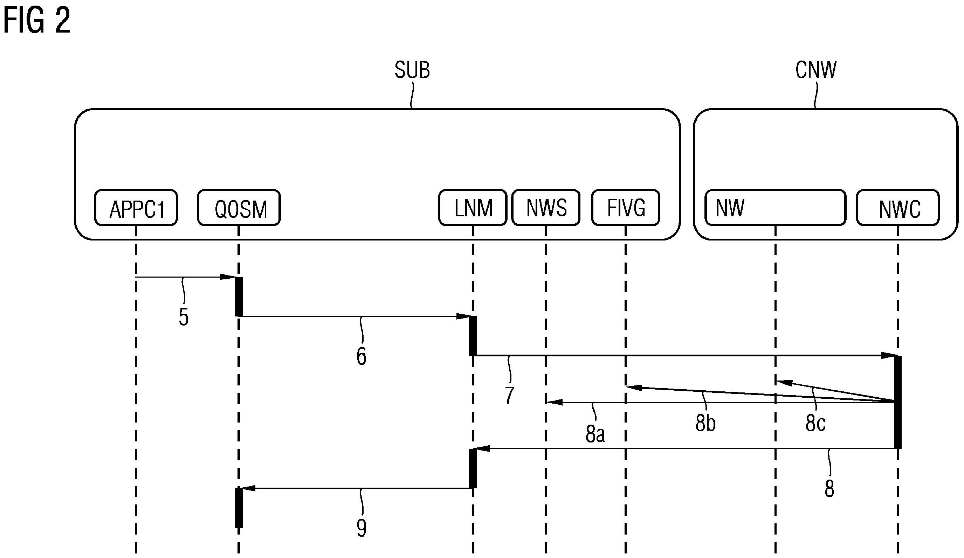

Für die Kommunikation der Anwendungskomponenten APPC1 miteinander müssen die jeweils geforderten Datenfluss-Qualitäten sichergestellt werden:
Hierzu wird wie in Fig. 2 dargestellt in weiteren Verfahrensschritten ein QoS-Manager QOSM herangezogen, dem die Anwendungskomponente APPC1 auf Abonnementseite SUB die gewünschten Datenfluss-Qualitäten in einem Anforderungsschritt 5 mitteilt. Der QoS-Manager QOSM kann als eigenständige oder als eine abgeleitete Instanz einer DDS-Anwendung realisiert und kommuniziert mit einem Kommunikationsschritt 6 mit dem Local-Network-Manager LNM. Mittels des Kommunikationsschritts 6 übermittelt der QoS-Manager QOSM die Datenfluss-Qualitäten QoS an den Local-Network-Manager LNM. Der QoS-Manager QOSM fungiert folglich als Schnittstelle zwischen der Anwendungskomponente APPC1 und dem Local-Network-Manager LNM. Der QoS-Manager QOSM bildet eine Schnittstelle zum datenzentrischen Publish-Subscribe-Netzwerk, d. h. der QoS-Manager QOSM erweitert die Anwendungsschnittstellen API.

Im Campus-Netzwerk CNW ist ein Network-Controller NWC implementiert. Der Network-Controller NWC nimmt die Datenfluss-Qualitäten QoS vom Local-Network-Manager LNM in einem Übertragungsschritt 7 entgegen. Der Network-Controller NWC konfiguriert 8c, 8d, 8b das Netzwerk NW, eine zugehörige Netzwerkschnittstellenkarte sowie 5G-Endpunkte des 5G-Netzwerks und ein virtuelles Netzwerk NW sowie weitere Netzwerkkomponenten. Auf diese Weise wird ein unterliegendes virtuelles Netzwerk NW mit den erforderlichen Datenfluss-Qualitäten konfiguriert und eingerichtet. Der Network-Controller NWC sendet das Ergebnis der Konfiguration, hier insbesondere die Information über die Verfügbarkeit des so konfigurierten virtuellen Netzwerks NW, mittels eines Sendeschritts 8 zurück an den Local-Network-Manager LNM.

Der Local-Network-Manager LNM übermittelt die festgelegten Netzwerkparameter zurück an den QoS-Manager QOSM mit einem Übermittlungsschritt 9. Der QoS-Manager QOSM speichert die zu den beabsichtigten Datenfluss-Qualitäten gehörigen Netzwerkparameter. Der Local-Network-Manager LNM bildet folglich das Gegenstück zum Netzwerk-Controller NWC auf der Seite der Anwendungskomponente APPC1 der Abonnementseite SUB.

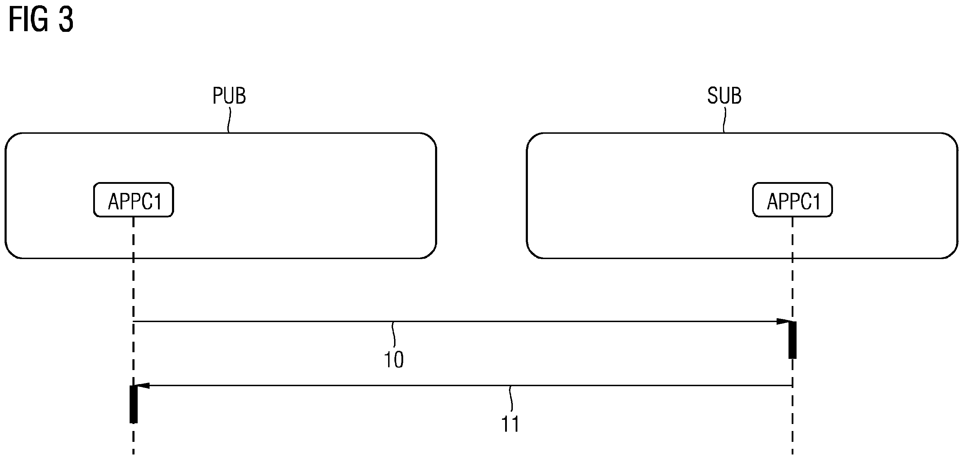

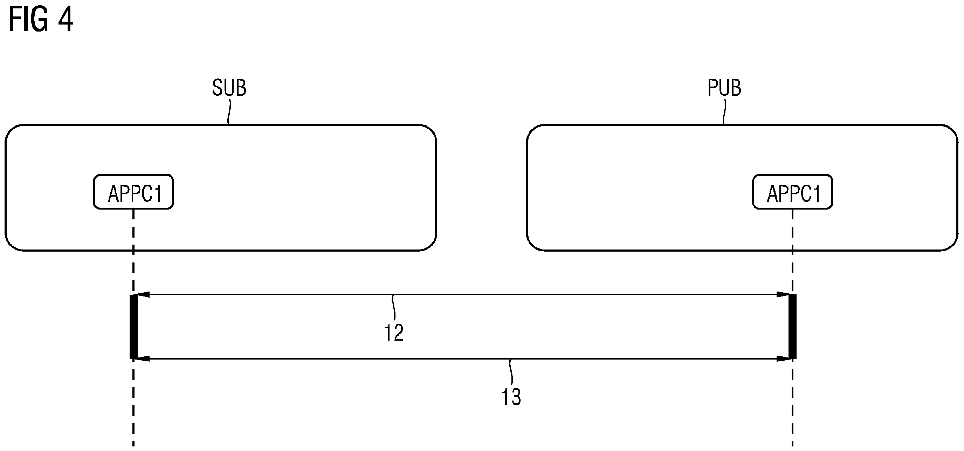

Mittels erfolgter Identifikation 10, 11 (Fig. 3) der miteinander kommunizierenden Anwendungskomponenten APPC1 auf Abonnementseite SUB und Publikationsseite PUB werden die Abonnements zwischen diesen Anwendungskomponenten APPC1 mittels des virtuellen Netzwerks NW vermittelt und es werden mittels der Kommunikationsschritte 12, 13 (Fig. 4) Informationen zwischen den Anwendungskomponenten APPC1 ausgetauscht.

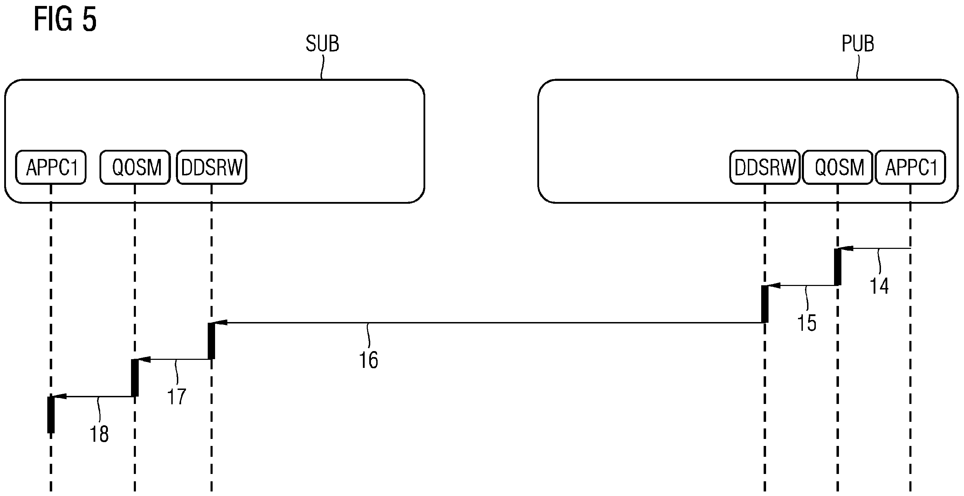

Der zweite Verfahrensteil ist in Fig. 5 dargestellt und umfasst die nachfolgend genannten Verfahrensschritte wie nachfolgend beschrieben:
In diesem zweiten Verfahrensteil ist das Netzwerk NW für die geforderte Datenfluss-Qualität wie oben beschrieben eingerichtet.

Eine Anwendungskomponente APPC1 nutzt die erweiterten Anwendungsschnittstellen des Publish-Subscribe-Netzwerks für ein Abonnement SUB oder eine Veröffentlichung PUB zu einem bestimmten Thema mittels des QoS-Managers QOSM. Beispielsweise stellt eine weitere Anwendungskomponente APPC1 eine Veröffentlichungsanfrage 14 mit den Parametern "Thema", "Nachricht", "Optionen" und "Datenfluss-Qualitäten", wobei "Thema" das Thema, zu welchem veröffentlicht werden soll, bezeichnet. "Nachricht" bezeichnet den Nachrichteninhalt wie im DDS-Protokoll definiert, Optionen die DDS-Optionen des DDS-Protokolls. "Datenfluss-Qualitäten" bezeichnet die Datenfluss-Qualitäten für den Datenfluss, welche von der Anwendungskomponente APPC1 und dem virtuellen Netzwerk NW erfüllt werden müssen.

Nachfolgend validiert der QoS-Manager QOSM die Veröffentlichungsanfrage 14, die zugehörigen Parameter und die zugehörigen Datenfluss-Qualitäten.

Wenn bereits eine zu den Datenfluss-Qualitäten passende Netzwerkkonfiguration besteht, findet der QoS-Manager QOSM die zugehörige Netzwerkkonfiguration auf und teilt den Kommunikationswunsch der Anwendungskomponente APPC1 an den DDS-Reader und -Writer DDSRW auf der Publikationsseite PUB mit. Folglich ersetzt der QoS-Manager QOSM gewissermaßen mittels seiner Datenbank von Datenfluss-Qualitäten und zugeordneten Netzwerckonfigurationen für virtuelle Netzwerke NW den Local-Network-Manager LNM. Der DDS-Reader und -Writer DDSRW der Publikationsseite teilt den Publikationswunsch an DDS-Reader und - Writer DDSRW der Abonnementseite SUB mit, sodass die Anwendungskomponenten APPC1 einander bekannt gemacht werden können. Der DDS-Reader und -Writer DDSRW der Abonnementseite SUB teilt den Kommunikationswunsch an den QoS-Manager QOSM mit, der wiederum die Anwendungskomponente APPC1 auf Abonnementseite SUB einbindet. Die QoS-Manager QOSM kennen bereits die zu den jeweiligen Datenfluss-Qualitäten passenden virtuellen Netzwerke NW mit ihren jeweiligen Konfigurationen, sodass das erforderliche virtuelle Netzwerk NW für die geforderten Datenfluss-Qualitäten aus einer Datenbank bestimmt und festgelegt und somit eingerichtet werden kann.

Entsprechend kann bei bekannter Netzwerkkonfiguration von virtuellen Netzwerken zu geforderten Datenfluss-Qualitäten das jeweils geeignete virtuelle Netzwerk sogleich eingerichtet und zur Publish-Subscribe-Kommunikation zwischen den Anwendungskomponenten APPC1 der Publikationsseite PUB und der Abonnementseite SUB eingerichtet werden.

## Patentansprüche

1. Verfahren zum Bereitstellen einer Kommunikationsverbindung in einem brokerlosen Publish-Subscribe-Netzwerk an eine Anwendung (APPC1), bei welchem eine Anforderung (1) der Anwendung (APPC1) an die Datenfluss-Qualität entgegengenommen wird und eine Netzwerkkonfiguration (8b, 8c, 8d) für die Kommunikationsverbindung abhängig von der Datenfluss-Qualität gewählt wird und ein, bevorzugt virtuelles, Netzwerk (NW) mit dieser Netzwerkkonfiguration herangezogen wird und die Kommunikationsverbindung mit diesem Netzwerk realisiert (21, 22, 23, 24, 25, 27, 27) wird.

2. Verfahren nach dem vorhergehenden Anspruch, bei welchem die Kommunikationsverbindung eine Publish-Verbindung der Anwendung (APPC1) ist.

3. Verfahren nach einem der vorhergehenden Ansprüche, bei welchem die Kommunikationsverbindung eine Subscribe-Verbindung der Anwendung (APPC1) ist.

4. Verfahren nach einem der vorhergehenden Ansprüche, bei welchem eine Netzwerk-Komponente (LNM) herangezogen oder instanziiert wird, welche abhängig von der mindestens einen Anforderung an die Datenfluss-Qualität eine Netzwerkkonfiguration ermittelt.

5. Verfahren nach einem der vorhergehenden Ansprüche, bei welchem das Netzwerk (NW) abhängig von der Datenfluss-Qualität ausgewählt wird.

6. Verfahren nach einem der vorhergehenden Ansprüche, bei welchem das Netzwerk (NW) abhängig von der Datenfluss-Qualität mit der Netzwerkkonfiguration konfiguriert wird.

7. Verfahren nach einem der vorhergehenden Ansprüche, bei welchem das, bevorzugt virteulle, Netzwerk (NW) mit einem 5G-Netzerk oder mit einem 6G-Netzwerk realisiert ist.

8. Verfahren zur Kommunikation in einem brokerlosen Publish-Subscribe-Netzwerk, bei welchem mit einem Verfahren zum Bereitstellen einer Kommunikationsverbindung in einem brokerlosen Publish-Subscribe-Netzwerk eine Kommunikationsverbindung bereitgestellt wird und die Kommunikationsverbindung zur Kommunikation herangezogen wird.

9. Verfahren nach einem der vorhergehenden Ansprüche, bei welchem die Kommunikationsverbindung für einen Fertigungsprozess und/oder einen Wartungsprozess und/oder einen Logistikprozess und/oder ein Robotiksystem herangezogen wird.

10. Brokerloses Publish-Subscribe-Netzwerk, insbesondere ausgebildet zur Ausführung eines Verfahrens nach einem der vorhergehenden Ansprüche, welches eine Datenfluss-Komponente (QOSM) aufweist, die eine Anforderung für eine Datenfluss-Qualität entgegennimmt und welche ausgebildet ist, ein Konfigurieren eines, bevorzugt virtuellen, Netzwerks (NW) abhängig von der Datenfluss-Qualität zu initiieren.

11. Brokerloses Publish-Subscribe-Netzwerk nach einem der vorhergehenden Ansprüche, aufweisend eine Netzwerk-Komponente (LNM), der ausgebildet ist, abhängig von der Datenfluss-Qualität und initiiert durch die Datenflusskomponente eine Netzwerkkonfiguration für das, bevorzugt virtuelle, Netzwerk (NW) zu ermitteln oder auszuwählen.

12. Brokerloses Publish-Subscribe-Netzwerk nach einem der vorhergehenden Ansprüche, aufweisend eine Netzwerksteuerungs-Komponente (NWC), welche ausgebildet ist, abhängig von der Datenfluss-Qualität das, bevorzugt virtuelle, Netzwerk (NW) zu konfigurieren.
